# EUROPEAN PATENT SPECIFICATION

(11) **EP 3 666 546 B1**
(45) Date of publication and mention of the grant of the patent: **20.07.2022**
(21) Application number: 18851306.3
(22) Date of filing: 31.05.2018
(51) Int. Cl.: B60C 5/14, B60C 1/00

(54) **PNEUMATIC TIRE**
LUFTREIFEN
PNEUMATIQUE

(30) Priority: 30.08.2017 JP 2017165840
(43) Date of publication of application: 17.06.2020
(73) Proprietor: Sumitomo Rubber Industries, Ltd., Kobe-shi, Hyogo 651-0072 (JP)
(72) Inventor: HORIGUCHI, Takuya, Kobe-shi, Hyogo, 651-0072 (JP); NAKAJIMA, Hiroki, Kobe-shi, Hyogo, 651-0072 (JP)
(74) Representative: Manitz Finsterwald Patent- und Rechtsanwaltspartnerschaft mbB
(86) International application number: PCT/JP2018/020959
(87) International publication number: WO 2019/044086

(56) References cited:
- WO-A1-2007/043497
- WO-A1-2013/038787
- WO-A1-2014/041842
- JP-A- 2006 167 919
- JP-A- 2009 279 974
- JP-A- 2009 528 178
- JP-A- 2012 510 389
- JP-A- 2015 174 594

## Description

### TECHNICAL FIELD

The present invention relates to a pneumatic tire.

### BACKGROUND ART

Pneumatic tires are made up of various components including innerliners as well as treads that come in contact with the road. Innerliners are tire components that provide air retention by reducing air leakage (air permeation) from inside to outside of the tire. These components contain butyl-based rubbers having low air permeability, e.g., butyl rubber, to provide air retention (for example, Patent Literature 1). Moreover, another attempt has been made to incorporate a styrene-isobutylene-styrene block copolymer in order to provide air retention.

JP 2006 167919 A describes a resin film layer and rubber-like elastic-body layer which can be used as an inner liner, e.g. for a pneumatic tire. The resin film layer can include a thermoplastic elastomer and can be used as a mono-layer film or as a multilayer film.

A further inner liner for pneumatic tires is disclosed in WO 2014/041842 A1.

### CITATION LIST

### PATENT LITERATURE

Patent Literature 1: JP 2014-227494 A

### SUMMARY OF INVENTION

### TECHNICAL PROBLEM

As a result of experimentation, the present inventors have discovered that an innerliner rubber composition containing a thermoplastic elastomer such as a styrene-isobutylene-styrene block copolymer exhibits improved air retention but has poor vulcanized adhesion to different rubber compounds, so that peeling (separation) may occur at the interface between the innerliner (first layer) and a second layer adjacent to the first layer during running of the tire. It has also been found that such peeling is likely to occur particularly in the joint portion formed during the tire building process.

One possible solution to this problem is attaching a butyl tape to the joint portion. However, this method is insufficient in that, for example, peeling may occur in portions other than the joint portion.

Moreover, the inventors have discovered as a result of extensive experimentation that stress concentration during running may cause cracking in the first layer.

The present invention aims to solve the problems and provide a pneumatic tire which is excellent in air retention and adhesion at the interface between the first and second layers, particularly in the joint portion, and which is resistant to cracking in the first layer.

### SOLUTION TO PROBLEM

The present invention relates to a pneumatic tire, including: a carcass, wherein the carcass is a component including tire cords and a tire cord topping rubber layer;
a third layer adjacent to the carcass on its tire-radially inner side; a second layer adjacent to the third layer on its tire-radially inner side; and a first layer adjacent to the second layer on its tire-radially inner side,
the third layer being continuously provided along the carcass at least from a bead apex tip portion to a portion below a tire-axially outermost end of a breaker,
the first layer including a first layer rubber composition containing a thermoplastic elastomer and a butyl-based rubber,
the second layer including a second layer rubber composition containing a butyl-based rubber and an isoprene-based rubber,
the third layer including a third layer rubber composition containing an isoprene-based rubber.

Preferably, a difference between a distance from an equatorial plane to a tire-axially innermost end of the third layer in a tire axial direction and a distance from the equatorial plane to the tire-axially outermost end of the breaker in the tire axial direction is 40 mm or less.

Preferably, the first and second layers are continuously provided from one bead to the other bead.

Preferably, the third layer is provided only from the bead apex tip portion to the portion below the tire-axially outermost end of the breaker.

Preferably, the first layer constitutes a component located on a radially innermost side of the tire.

### ADVANTAGEOUS EFFECTS OF INVENTION

The present invention provides a pneumatic tire which includes a carcass, a third layer adjacent to the carcass on its tire-radially inner side, a second layer adjacent to the third layer on its tire-radially inner side, and a first layer adjacent to the second layer on its tire-radially inner side, wherein the third layer is continuously provided along the carcass at least from a bead apex tip portion to a portion below the tire-axially outermost end of a breaker, the first layer includes a first layer rubber composition containing a thermoplastic elastomer and a butyl-based rubber, the second layer includes a second layer rubber composition containing a butyl-based rubber and an isoprene-based rubber, and the third layer includes a third layer rubber composition containing an isoprene-based rubber. Such a pneumatic tire is excellent in air retention and adhesion at the interface between the first and second layers, particularly in the joint portion, and is resistant to cracking in the first layer.

### BRIEF DESCRIPTION OF DRAWINGS

Fig. 1 illustrates a partial cross-sectional view of a pneumatic tire according to one embodiment of the present invention.
Fig. 2 illustrates a partial cross-sectional view of a pneumatic tire according to one embodiment of the present invention.
Fig. 3 illustrates a partial cross-sectional view of a pneumatic tire according to one embodiment of the present invention.

### DESCRIPTION OF EMBODIMENTS

The pneumatic tire of the present invention includes: a carcass; a third layer adjacent to the carcass on its tire-radially inner side; a second layer adjacent to the third layer on its tire-radially inner side; and a first layer adjacent to the second layer on its tire-radially inner side.

The third layer is continuously provided along the carcass at least from a bead apex tip portion to a portion below the tire-axially outermost end of a breaker.

The first layer includes a first layer rubber composition containing a thermoplastic elastomer and a butyl-based rubber.

The second layer includes a second layer rubber composition containing a butyl-based rubber and an isoprene-based rubber.

The third layer includes a third layer rubber composition containing an isoprene-based rubber.

The present invention provides both air retention and adhesion at the interface between first and second layers, particularly in the joint portion (hereinafter, also referred to simply as adhesion) and, further, can resist cracking in the first layer. The mechanism of these effects can be explained as follows.

The present invention combines a first layer containing a thermoplastic elastomer such as a styrene-isobutylene-styrene block copolymer with a second layer containing a butyl-based rubber and an isoprene-based rubber to improve adhesion between both components. Thus, the adhesion at the interface between the first and second layers, particularly in the joint portion, is improved so that peeling at the joint interface can be suppressed.

As described, in the present invention, even though the first layer (innerliner) containing a thermoplastic elastomer such as a styrene-isobutylene-styrene block copolymer is used, its combination with the specific second layer provides improved adhesion between both components. This permits the use of a first layer containing a thermoplastic elastomer such as a styrene-isobutylene-styrene block copolymer that is excellent in air retention.

Further, in addition to the good air retention resulting from the incorporation of a thermoplastic elastomer such as a styrene-isobutylene-styrene block copolymer and a butyl-based rubber in the first layer, better air retention is achieved in the present invention because the second layer also contains a butyl-based rubber.

Accordingly, the present invention provides synergistically improved air retention and adhesion due to the synergistic effect of the specific first and second layers.

Moreover, the present invention uses a third layer that is continuously provided along a carcass at least from a bead apex tip portion to a portion below the tire-axially outermost end of a breaker. This suppresses deformation of the first layer caused by stress concentration during running and by the molding/vulcanization processes and thus suppresses cracking in the first layer. Such cracking is more likely to occur in a thinner first layer. However, the presence of the third layer suppresses cracking even in the thin first layer. This permits the use of a thin first layer to reduce the tire weight and thereby provide a tire with greater fuel economy.

The pneumatic tire of the present invention includes a carcass, a third layer adjacent to the carcass on its tire-radially inner side, a second layer adjacent to the third layer on its tire-radially inner side, and a first layer adjacent to the second layer on its tire-radially inner side.

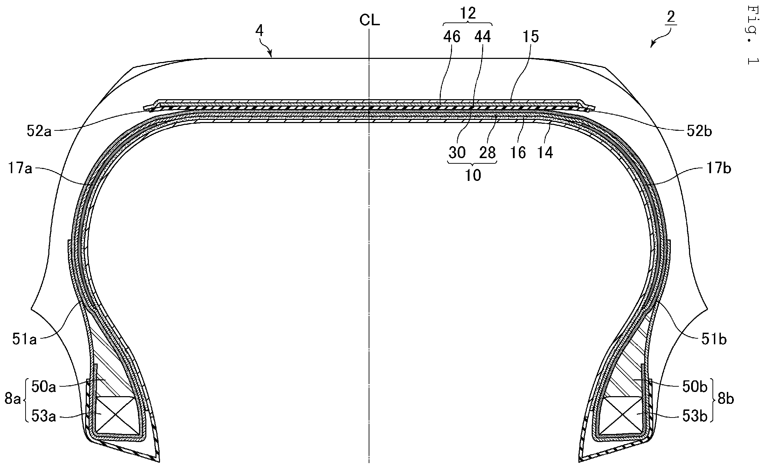

A carcass refers to a component including tire cords and a tire cord topping rubber layer. Specifically, it is a component as shown in, for example, Fig. 1 of JP 2008-75066 A.

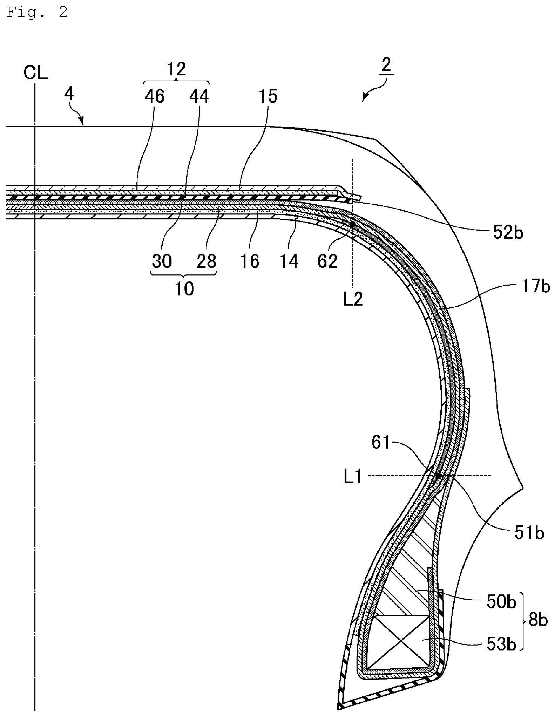

The first layer corresponds to a component located on the radially innermost side of a tire (a component configured to form an inner cavity surface of a tire), i.e. an innerliner. This component reduces air permeation to retain the internal pressure of the tire. Specifically, it is a component as shown in Fig. 1 of JP 2008-291091 A, Figs. 1 and 2 of JP 2007-160980 A, etc. In a usual tire, an innerliner (first layer) forms an inner cavity surface of the tire. However, of course, another tire component (e.g., a sealant layer that can seal puncture holes when the tire is punctured) may be provided on the tire-radially inner side of the first layer.

The second layer corresponds to a component provided between the first layer and the carcass or the third layer. The second layer may be provided along the first layer.

Preferably, the first and second layers are continuously provided from one bead to the other bead. In this case, there is no area where the air is likely to pass through, and thus the advantageous effects can be more suitably achieved.

The third layer corresponds to a component provided between the carcass and the second layer. Specifically, the third layer is adjacent to the carcass on the tire-radially inner side of the carcass and is also adjacent to the second layer on the tire-radially outer side of the second layer. And, the third layer is continuously provided along the carcass at least from a bead apex tip portion to a portion below the tire-axially outermost end of a breaker.

The bead apex and the tire-axially outermost end of the breaker refer to the bead apex and the tire-axially outermost end of the breaker, respectively, which are in proximity to the same sidewall (a combination of the bead apex 50a and the tire-axially outermost end 52a of the breaker or a combination of the bead apex 50b and the tire-axially outermost end 52b of the breaker in Fig. 1). The tip of the bead apex refers to the tip of the bead apex on the tread side (the tip 51a or 51b of the bead apex on the tread side in Fig. 1).

The third layer may be continuously provided along the carcass at least from a bead apex tip portion to a portion below the tire-axially outermost end of a breaker. The third layer may be provided extending beyond the bead apex tip portion to the radially inner side of the tire, and may be provided extending beyond the portion below the tire-axially outermost end of the breaker to the axially inner side of the tire. For example, it may be continuously provided from one bead to the other bead. However, the third layer is preferably provided only from the bead apex tip portion to the portion below the tire-axially outermost end of the breaker in order to more suitably achieve the advantageous effects and to reduce the tire weight.

Figs. 1 to 3 each illustrate a partial cross-sectional view of a pneumatic tire according to one embodiment of the present invention.

In Fig. 1, the vertical direction corresponds to the radial direction of the tire, the horizontal direction corresponds to the axial direction thereof, and the direction perpendicular to the drawing plane corresponds to the circumferential direction. The dash-dotted line CL represents the equatorial plane of the pneumatic tire 2. A tread portion 4 of the pneumatic tire 2 includes a first layer 14, a second layer 16, a carcass 10 (a first ply 28 and a second ply 30), a breaker 12 (an inner layer 44 and an outer layer 46), and a band 15 in the stated order from the radially inner side of the tire. In one embodiment of the present invention, the second layer rubber composition is used in the second layer 16 adjacent to the carcass 10 on the tire-radially inner side, and the first layer rubber composition is used in the first layer 14 adjacent to the second layer 16 on the tire-radially inner side.

Moreover, in a portion tire-radially inward of the tire-axially outermost end 52 of the breaker 12 (inner layer 44), the carcass 10 (second ply 30, first ply 28), the third layer 17, the second layer 16, and the first layer 14 are provided in the stated order from the radially outer side of the tire. In other words, in a portion tire-radially inward of the tire-axially outermost end of a breaker, there are a carcass, a third layer adjacent to the carcass on the tire-radially inner side, a second layer adjacent to the third layer on the tire-radially inner side, and a first layer adjacent to the second layer on the tire-radially inner side.

As shown in Fig. 1, in the tread portion, there are the carcass, the second layer adjacent to the carcass on the tire-radially inner side, and the first layer adjacent to the second layer on the tire-radially inner side.

As shown in Fig. 1, in the portion (shoulder portion) tire-radially inward of the tire-axially outermost end of the breaker, there are the carcass, the third layer adjacent to the carcass on the tire-radially inner side, the second layer adjacent to the third layer on the tire-radially inner side, and the first layer adjacent to the second layer on the tire-radially inner side.

As shown in Fig. 1, in a sidewall portion, there are the carcass, the third layer adjacent to the carcass on the tire-axially inner side, the second layer adjacent to the third layer on the tire-axially inner side, and the first layer adjacent to the second layer on the tire-axially inner side.

In the pneumatic tire shown in Fig. 1, the first layer 14 and the second layer 16 are continuously provided from one bead 8a to the other bead 8b. Moreover, as shown in Fig. 2, the third layer 17 is continuously provided along the carcass 10 (first ply 28) from a bead apex tip portion 61 to a portion 62 below the tire-axially outermost end of the breaker. In one embodiment of the present invention, the third layer rubber composition is used in the third layer 17 that is continuously provided along the carcass 10 (first ply 28) from the bead apex tip portion 61 to the portion 62 below the tire-axially outermost end of the breaker.

Herein, a bead apex tip portion refers to the intersection of a surface (tire-axially inner surface) of a carcass with a straight line parallel to the tire axial direction and passing through the tip of a bead apex on the tread side. In Fig. 2, the bead apex tip portion 61 refers to the intersection of a surface (tire-axially inner surface) of the first ply 28 with a straight line L1 parallel to the tire axial direction and passing through the tip 51b of the bead apex 50b on the tread side.

Herein, a portion below a tire-axially outermost end of a breaker refers to the intersection of a surface (tire-radially inner surface) of a carcass with a straight line parallel to the tire radial direction and passing through the tire-axially outermost end of a breaker. In Fig. 2, the portion 62 below the tire-axially outermost end of the breaker refers to the intersection of a surface (tire-radially inner surface) of the first ply 28 with a straight line L2 parallel to the tire radial direction and passing through the tire-axially outermost end 52b of the breaker 12 (inner layer 44).

When a plurality of breakers are present, as shown in Fig. 2 (two breakers in Fig. 2), the tire-axially outermost end of the breaker refers to the tire-axially outermost end of the breaker (inner layer 44 in Fig. 2) that extends most tire-axially outward, among the plurality of breakers.

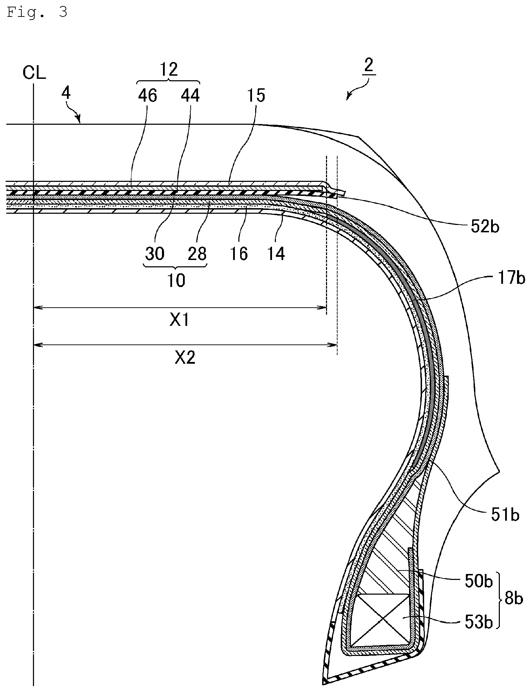

The difference between the distance (X1 in Fig. 3) from the equatorial plane to the tire-axially innermost end of the third layer and the distance (X2 in Fig. 3) from the equatorial plane to the tire-axially outermost end of the breaker is preferably 40 mm or less, more preferably 35 mm or less, still more preferably 30 mm or less, and the lower limit thereof is preferably 0 mm or more. In this case, the advantageous effects can be more suitably achieved.

The first layer, the second layer, and the third layer include a first layer rubber composition, a second layer rubber composition, and a third layer rubber composition, respectively.

Next, the first, second, and third layer rubber compositions used are described.

### (First layer rubber composition)

The first layer rubber composition contains a polymer component that includes a thermoplastic elastomer such as a styrene-isobutylene-styrene block copolymer (SIBS) and a butyl-based rubber.

Herein, a polymer component refers to an elastomer component serving as a base material of a rubber composition and specifically refers to a diene rubber used as a rubber component in the tire industry or a thermoplastic elastomer used as a based material of a first layer (rubber) composition.

Non-limiting examples of the thermoplastic elastomer include styrene-isobutylene-styrene block copolymers (SIBS), styrene-isoprene-styrene block copolymers (SIS), styrene-isobutylene block copolymers (SIB), styrene-butadiene-styrene block copolymers (SBS), styrene-ethylene-butene-styrene block copolymers (SEBS), styrene-ethylene-propylene-styrene block copolymers (SEPS), styrene-ethylene-ethylene-propylene-styrene block copolymers (SEEPS), and styrene-butadiene-butylene-styrene block copolymers (SBBS). Preferred among these is SIBS.

The isobutylene block in SIBS provides excellent air retention. Thus, the use of the rubber composition containing SIBS in the first layer can provide a pneumatic tire with excellent air retention.

Moreover, since the molecular structure of SIBS is completely saturated, except for the aromatic portions, SIBS is resistant to deterioration or hardening and has excellent durability. Thus, the use of the rubber composition containing SIBS in the first layer can provide a pneumatic tire with excellent durability.

The SIBS preferably has a weight average molecular weight (Mw) of 50,000 or more, more preferably 70,000 or more, but preferably 400,000 or less, more preferably 200,000 or less. When the SIBS has a weight average molecular weight within the range indicated above, the advantageous effects can be more suitably achieved.

The weight average molecular weight (Mw) of the SIBS may be determined by gel permeation chromatography (GPC) (GPC-8000 series available from Tosoh Corporation, detector: differential refractometer, column: TSKGEL SUPERMALTPORE HZ-M available from Tosoh Corporation) calibrated with polystyrene standards.

The styrene unit content of the SIBS is preferably 10% by mass or higher, more preferably 15% by mass or higher, but is preferably 40% by mass or lower, more preferably 30% by mass or lower. When the styrene unit content is within the range indicated above, the advantageous effects can be more suitably achieved.

The SIBS preferably has a molar ratio of isobutylene units to styrene units (isobutylene units/styrene units) of 40/60 to 95/5 from the standpoint of rubber elasticity of the copolymer. In the SIBS, the degrees of polymerization of the isobutylene and styrene blocks are preferably about 10,000-150,000 and about 5,000-30,000, respectively, from the standpoint of rubber elasticity and handleability (a degree of polymerization of less than 10,000 results in a liquid state).

Herein, the isobutylene and styrene unit contents of the SIBS are determined by H¹-NMR.

The SIBS may be prepared by common methods for polymerization of vinylic compounds. For example, it may be produced by living cationic polymerization.

JP S62-48704 A and JP S64-62308 A describe that living cationic polymerization of isobutylene and other vinyl compounds is possible, and that vinyl compounds may be used with isobutylene and other compounds to produce polyisobutylene block copolymers. In addition, for example, US Patent No. 4,946,899, US Patent No. 5,219,948, and JP H3-174403 A describe methods for producing vinyl compound polymers by living cationic polymerization.

The SIBS may be a commercial product, such as those available from Kaneka Corporation (e.g., SIBSTAR series).

The amount of the thermoplastic elastomer (preferably SIBS) based on 100% by mass of the polymer component is preferably 50% by mass or more, more preferably 60% by mass or more. When the amount is not less than the lower limit, good air retention and good adhesion (particularly air retention) tend to be obtained. The amount is also preferably 95% by mass or less. When the amount is not more than the upper limit, good air retention and good adhesion (particularly adhesion) tend to be obtained.

Examples of the butyl-based rubber include halogenated butyl rubbers (X-IIR) such as brominated butyl rubber (BR-IIR) and chlorinated butyl rubber (Cl-IIR), and butyl rubber (IIR). These may be used alone, or two or more of these may be used in combination. In order to more suitably achieve the advantageous effects, X-IIR such as Cl-IIR is preferred among these, with Cl-IIR being more preferred.

The butyl-based rubber may be a commercial product available from, for example, Exxon Mobil Corporation, JSR Corporation, or Japan Butyl Co., Ltd.

The amount of the butyl-based rubber based on 100% by mass of the polymer component is preferably 5% by mass or more. When the amount is not less than the lower limit, good air retention and good adhesion (particularly adhesion) tend to be obtained. The amount is also preferably 50% by mass or less, more preferably 40% by mass or less. When the amount is not more than the upper limit, good air retention tends to be obtained.

Non-limiting examples of materials other than the thermoplastic elastomer and butyl-based rubber that may be used in the polymer component of the first layer rubber composition include diene rubbers such as isoprene-based rubbers, e.g., natural rubber (NR) and polyisoprene rubber (IR), polybutadiene rubber (BR), styrene butadiene rubber (SBR), chloroprene rubber (CR), and acrylonitrile butadiene rubber (NBR). These may be used alone, or two or more of these may be used in combination.

Herein, examples of the isoprene-based rubbers include natural rubber (NR), polyisoprene rubber (IR), refined NR, modified NR, and modified IR. Examples of the NR include those commonly used in the tire industry such as SIR20, RSS#3, and TSR20. Any IR may be used, and examples include those commonly used in the tire industry, such as IR2200. Examples of the refined NR include deproteinized natural rubber (DPNR) and highly purified natural rubber (UPNR). Examples of the modified NR include epoxidized natural rubber (ENR), hydrogenated natural rubber (HNR), and grafted natural rubber. Examples of the modified IR include epoxidized polyisoprene rubber, hydrogenated polyisoprene rubber, and grafted polyisoprene rubber. These may be used alone, or two or more of these may be used in combination. NR is preferred among these.

The combined amount of the butyl-based rubber and the thermoplastic elastomer (preferably SIBS) based on 100% by mass of the polymer component is preferably 80% by mass or more, more preferably 90% by mass or more, still more preferably 100% by mass.

The first layer rubber composition preferably contains carbon black. This tends to provide good air retention and good adhesion.

Any carbon black may be used, and examples include N134, N110, N220, N234, N219, N339, N330, N326, N351, N550, and N762. These may be used alone, or two or more of these may be used in combination.

The carbon black preferably has a nitrogen adsorption specific surface area (N₂SA) of 5 m²/g or more, more preferably 10 m²/g or more, still more preferably 15 m²/g or more. When the N₂SA is not less than the lower limit, good air retention and good adhesion tend to be obtained. The N₂SA is also preferably 300 m²/g or less, more preferably 150 m²/g or less, still more preferably 40 m²/g or less. When the N₂SA is not more than the upper limit, good air retention and good adhesion tend to be obtained.

The nitrogen adsorption specific surface area of the carbon black can be determined in accordance with JIS K6217-2:2001.

The carbon black preferably has a dibutyl phthalate oil absorption (DBP) of 5 mL/100 g or more, more preferably 40 mL/100 g or more, still more preferably 70 mL/100 g or more. When the DBP is not less than the lower limit, good air retention and good adhesion tend to be obtained. The DBP is also preferably 300 mL/100 g or less, more preferably 200 mL/100 g or less, still more preferably 120 mL/100 g or less. When the DBP is not more than the upper limit, good air retention and good adhesion tend to be obtained.

The DBP of the carbon black can be measured by a method in accordance with JIS K6217-4:2001.

The carbon black may be a commercial product available from, for example, Asahi Carbon Co., Ltd., Cabot Japan K.K., Tokai Carbon Co., Ltd., Mitsubishi Chemical Corporation, Lion Corporation, NSCC Carbon Co., Ltd., or Columbia Carbon.

The amount of the carbon black, if present, per 100 parts by mass of the polymer component is preferably 20 parts by mass or more, more preferably 30 parts by mass or more. The amount is also preferably 65 parts by mass or less. When the amount of the carbon black is adjusted as indicated above, better air retention and adhesion can be obtained. Further, cracking during running can be suppressed, and good fuel economy can also be obtained.

The first layer rubber composition preferably contains zinc oxide. This tends to provide good air retention and good adhesion.

Conventional zinc oxide may be used, and examples include commercial products available from Mitsui Mining & Smelting Co., Ltd., Toho Zinc Co., Ltd., HakusuiTech Co., Ltd., Seido Chemical Industry Co., Ltd., and Sakai Chemical Industry Co., Ltd.

The amount of the zinc oxide, if present, per 100 parts by mass of the polymer component is preferably 0.5 parts by mass or more, more preferably 1.0 part by mass or more. The amount is also preferably 5.0 parts by mass or less, more preferably 4.0 parts by mass or less, still more preferably 2.5 parts by mass or less. When the amount of the zinc oxide is adjusted as indicated above, better air retention and adhesion can be obtained. Further, cracking during running can be suppressed.

The first layer rubber composition preferably contains sulfur. This tends to provide good air retention and good adhesion.

Examples of the sulfur include those commonly used in the rubber industry, such as powdered sulfur, precipitated sulfur, colloidal sulfur, insoluble sulfur, highly dispersible sulfur, and soluble sulfur. These may be used alone, or two or more of these may be used in combination.

The sulfur may be a commercial product available from, for example, Tsurumi Chemical Industry Co., Ltd., Karuizawa Sulfur Co., Ltd., Shikoku Chemicals Corporation, Flexsys, Nippon Kanryu Industry Co., Ltd., or Hosoi Chemical Industry Co., Ltd.

The amount of the sulfur, if present, per 100 parts by mass of the polymer component is preferably 0.2 parts by mass or more, more preferably 0.4 parts by mass or more. The amount is also preferably 5.0 parts by mass or less, more preferably 3.0 parts by mass or less, still more preferably 2.0 parts by mass or less, particularly preferably 1.5 parts by mass or less. When the amount of the sulfur is adjusted as indicated above, better air retention and adhesion can be obtained.

### (Second layer rubber composition)

The second layer rubber composition contains a polymer component that includes a butyl-based rubber and an isoprene-based rubber.

The amount of the butyl-based rubber based on 100% by mass of the polymer component is preferably 50% by mass or more, more preferably 60% by mass or more, still more preferably 70% by mass or more. When the amount is not less than the lower limit, good air retention and good adhesion tend to be obtained. The amount is also preferably 90% by mass or less, more preferably 85% by mass or less. When the amount is not more than the upper limit, good air retention and good adhesion tend to be obtained.

The butyl-based rubber may be as described above and may be suitably used in embodiments as described above.

The amount of the isoprene-based rubber based on 100% by mass of the polymer component is preferably 10% by mass or more, more preferably 15% by mass or more. When the amount is not less than the lower limit, good air retention and good adhesion tend to be obtained. The amount is also preferably 50% by mass or less, more preferably 40% by mass or less, still more preferably 30% by mass or less. When the amount is not more than the upper limit, good air retention and good adhesion tend to be obtained.

The isoprene-based rubber may be as described above and may be suitably used in embodiments as described above.

The combined amount of the butyl-based rubber and the isoprene-based rubber based on 100% by mass of the polymer component is preferably 80% by mass or more, more preferably 90% by mass or more, still more preferably 100% by mass.

Materials other than the butyl-based rubber and isoprene-based rubber that may be used in the polymer component of the second layer rubber composition are not particularly limited, and those mentioned for the first layer rubber composition may be suitably used in embodiments as described therefor.

The second layer rubber composition preferably contains carbon black. This tends to provide good air retention and good adhesion.

Preferably, both the first and second layer rubber compositions contain carbon black. In this case, the adhesion interface can be suitably reinforced to provide better adhesion.

Any carbon black may be used, and those mentioned for the first layer rubber composition may be suitably used in embodiments as described therefor.

The amount of the carbon black, if present, per 100 parts by mass of the polymer component is preferably 50 parts by mass or more. The amount is also preferably 80 parts by mass or less, more preferably 70 parts by mass or less. When the amount of the carbon black is adjusted as indicated above, better air retention and adhesion can be obtained. Further, cracking during running can be suppressed, and good fuel economy can also be obtained.

The second layer rubber composition preferably contains sulfur. This tends to provide good air retention and good adhesion.

Any sulfur may be used, and those mentioned for the first layer rubber composition may be suitably used in embodiments as described therefor.

The amount of the sulfur, if present, per 100 parts by mass of the polymer component is preferably 0.2 parts by mass or more, more preferably 0.4 parts by mass or more, still more preferably 0.8 parts by mass or more. The amount is also preferably 5.0 parts by mass or less, more preferably 3.0 parts by mass or less, still more preferably 2.0 parts by mass or less, particularly preferably 1.5 parts by mass or less. When the amount of sulfur is adjusted as indicated above, better air retention and adhesion can be obtained.

The second layer rubber composition preferably contains zinc oxide. This tends to provide good air retention and good adhesion.

Any zinc oxide may be used, and those mentioned for the first layer rubber composition may be suitably used in embodiments as described therefor.

The amount of the zinc oxide, if present, per 100 parts by mass of the polymer component is preferably 0.5 parts by mass or more, more preferably 1.0 part by mass or more. The amount is also preferably 5.0 parts by mass or less, more preferably 4.0 parts by mass or less, still more preferably 2.5 parts by mass or less. When the amount of the zinc oxide is adjusted as indicated above, better air retention and adhesion can be obtained. Further, cracking during running can be suppressed.

### (Third layer rubber composition)

The third layer rubber composition contains a polymer component that includes an isoprene-based rubber.

The amount of the isoprene-based rubber based on 100% by mass of the polymer component is preferably 60% by mass or more, more preferably 70% by mass or more, still more preferably 80% by mass or more, and may be 100% by mass. When the amount is not less than the lower limit, cracking in the first layer tends to be more suitably suppressed.

The isoprene-based rubber may be as described above and may be suitably used in embodiments as described above.

Materials other than the isoprene-based rubber that may be used in the polymer component of the third layer rubber composition are not particularly limited, and those mentioned for the first layer rubber composition may be suitably used in embodiments as described therefor.

The third layer rubber composition preferably contains carbon black. This tends to more suitably suppress cracking in the first layer.

Preferably, all the first, second, and third layer rubber compositions contain carbon black. In this case, the adhesion interface can be suitably reinforced to provide better adhesion. At the same time, cracking in the first layer tends to be more suitably suppressed.

Any carbon black may be used, and those mentioned for the first layer rubber composition may be suitably used in embodiments as described therefor.

The amount of the carbon black, if present, per 100 parts by mass of the polymer component is preferably 50 parts by mass or more. The amount is also preferably 80 parts by mass or less, more preferably 70 parts by mass or less. When the amount of the carbon black is adjusted as indicated above, cracking in the first layer tends to be more suitably suppressed.

The third layer rubber composition preferably contains sulfur. This tends to more suitably suppress cracking in the first layer.

Any sulfur may be used, and those mentioned for the first layer rubber composition may be suitably used in embodiments as described therefor.

The amount of the sulfur, if present, per 100 parts by mass of the polymer component is preferably 0.2 parts by mass or more, more preferably 0.4 parts by mass or more, still more preferably 0.8 parts by mass or more. The amount is also preferably 5.0 parts by mass or less, more preferably 3.0 parts by mass or less, still more preferably 2.0 parts by mass or less, particularly preferably 1.5 parts by mass or less. When the amount of the sulfur is adjusted as indicated above, cracking in the first layer tends to be more suitably suppressed.

The third layer rubber composition preferably contains zinc oxide. This tends to more suitably suppress cracking in the first layer.

Any zinc oxide may be used, and those mentioned for the first layer rubber composition may be suitably used in embodiments as described therefor.

The amount of the zinc oxide, if present, per 100 parts by mass of the polymer component is preferably 0.5 parts by mass or more, more preferably 1.0 part by mass or more. The amount is also preferably 5.0 parts by mass or less, more preferably 4.0 parts by mass or less, still more preferably 2.5 parts by mass or less. When the amount of the zinc oxide is adjusted as indicated above, cracking in the first layer tends to be more suitably suppressed.

### (First, second, third layer rubber compositions)

The first, second, and third layer rubber compositions each preferably contain a vulcanization accelerator. In this case, the advantageous effects can be more suitably achieved.

Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, N-oxyethylene-2-benzothiazole sulfonamide, and N,N'-diisopropyl-2-benzothiazole sulfenamide; and guanidine vulcanization accelerators such as diphenylguanidine, diorthotolylguanidine, and orthotolylbiguanidine. These may be used alone, or two or more of these may be used in combination. Among these, thiazole vulcanization accelerators are preferred, with di-2-benzothiazolyl disulfide being more preferred, because the advantageous effects can be more suitably achieved.

The amount of the vulcanization accelerator, if present, per 100 parts by mass of the polymer component in the first, second, or third layer rubber composition is preferably 0.2 parts by mass or more, more preferably 0.5 parts by mass or more. The amount is also preferably 10 parts by mass or less, more preferably 3.0 parts by mass or less, still more preferably 2.0 parts by mass or less. When the amount is within the range indicated above, the advantageous effects tend to be well achieved.

The first, second, and third layer rubber compositions each preferably contain stearic acid. In this case, the advantageous effects can be more suitably achieved.

Conventional stearic acid may be used, and examples include commercial products available from NOF Corporation, Kao Corporation, FUJIFILM Wako Pure Chemical Corporation, and Chiba Fatty Acid Co., Ltd.

The amount of the stearic acid, if present, per 100 parts by mass of the polymer component in the first, second, or third layer rubber composition is preferably 0.5 parts by mass or more, more preferably 1.0 part by mass or more. The amount is also preferably 10 parts by mass or less, more preferably 3.0 parts by mass or less, still more preferably 2.0 parts by mass or less. When the amount is within the range indicated above, the advantageous effects tend to be well achieved.

The first, second, and third layer rubber compositions may each contain an antioxidant.

Examples of the antioxidant include: naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. These may be used alone, or two or more of these may be used in combination. Among these, p-phenylenediamine or quinoline antioxidants are preferred, with N-(1,3-dimethylbutyl)-N'-phenyl-p-phenylenediamine or 2,2,4-trimethyl-1,2-dihydroquinoline polymer being more preferred.

The antioxidant may be a commercial product available from, for example, Seiko Chemical Co., Ltd., Sumitomo Chemical Co., Ltd., Ouchi Shinko Chemical Industrial Co., Ltd., or Flexsys.

The amount of the antioxidant, if present, per 100 parts by mass of the polymer component in the first, second, or third layer rubber composition is preferably 0.3 parts by mass or more, more preferably 0.5 parts by mass or more. The amount is also preferably 10 parts by mass or less, more preferably 3.0 parts by mass or less, still more preferably 2.0 parts by mass or less.

The first, second, and third layer rubber compositions may each contain silica.

Examples of the silica include dry silica (anhydrous silica) and wet silica (hydrous silica). Wet silica is preferred because it contains a large number of silanol groups. These may be used alone, or two or more of these may be used in combination.

The silica preferably has a nitrogen adsorption specific surface area (N₂SA) of 90 m²/g or more, more preferably 120 m²/g or more, still more preferably 150 m²/g or more. The N₂SA is preferably 400 m²/g or less, more preferably 200 m²/g or less, still more preferably 180 m²/g or less.

The nitrogen adsorption specific surface area of the silica is measured by the BET method in accordance with ASTM D3037-81.

The silica may be a commercial product available from, for example, Degussa, Rhodia, Tosoh Silica Corporation, Solvay Japan, or Tokuyama Corporation.

The amount of the silica, if present, per 100 parts by mass of the polymer component in the first, second, or third layer rubber composition is preferably 5 parts by mass or more, more preferably 30 parts by mass or more. The amount is also preferably 200 parts by mass or less, more preferably 100 parts by mass or less.

To better achieve the advantageous effects, the combined amount of the carbon black and silica per 100 parts by mass of the polymer component in the first, second, or third layer rubber composition is preferably 20 parts by mass or more, more preferably 40 parts by mass or more, still more preferably 50 parts by mass or more, but preferably 250 parts by mass or less, more preferably 120 parts by mass or less, still more preferably 80 parts by mass or less.

The first, second, and third layer rubber compositions may each contain a silane coupling agent.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These may be used alone, or two or more of these may be used in combination.

The silane coupling agent may be a commercial product available from, for example, Degussa, Momentive, Shin-Etsu Silicone, Tokyo Chemical Industry Co., Ltd., AZmax. Co., or Dow Corning Toray Co., Ltd.

The amount of the silane coupling agent, if present, per 100 parts by mass of the silica in the first, second, or third layer rubber composition is preferably 3 parts by mass or more, more preferably 5 parts by mass or more. When the amount is 3 parts by mass or more, the effect of the added silane coupling agent tends to be obtained. The amount is also preferably 20 parts by mass or less, more preferably 10 parts by mass or less. When the amount is 20 parts by mass or less, an effect commensurate with the added amount and good processability during kneading tend to be obtained.

The first, second, and third layer rubber compositions may each contain a resin. The term "resin" as used here excludes those corresponding to the "polymer component".

Any resin commonly used in the tire industry may be used. Examples include coumarone-indene resins, terpenic resins, p-t-butylphenol acetylene resins, and acrylic resins. These may be used alone, or two or more of these may be used in combination.

The resin may be a commercial product available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JX Energy Corporation, Arakawa Chemical Industries, Ltd., or Taoka Chemical Co., Ltd.

The amount of the resin, if present, per 100 parts by mass of the polymer component in the first, second, or third layer rubber composition is preferably 1 part by mass or more, more preferably 3 parts by mass or more. The amount is also preferably 50 parts by mass or less, more preferably 30 parts by mass or less, still more preferably 15 parts by mass or less.

The first, second, and third layer rubber compositions may each contain an oil.

Examples of the oil include process oils and plant oils, and mixtures thereof. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These may be used alone, or two or more of these may be used in combination. Preferred among these are aromatic process oils.

The oil may be a commercial product available from, for example, Idemitsu Kosan Co., Ltd., Sankyo Yuka Kogyo K.K., Japan Energy Corporation, Olisoy, H&R, Hokoku Corporation, Showa Shell Sekiyu K.K., or Fuji Kosan Co., Ltd.

The amount of the oil, if present, per 100 parts by mass of the polymer component in the first, second, or third layer rubber composition is preferably 1 part by mass or more, more preferably 3 parts by mass or more. The amount is also preferably 80 parts by mass or less, more preferably 60 parts by mass or less, still more preferably 20 parts by mass or less. The amount of the oil here includes the amount of the oil contained in rubber (oil extended rubber).

The first, second, and third layer rubber compositions may each contain a liquid diene polymer as a softener.

The term "liquid diene polymer" refers to a diene polymer that is liquid at room temperature (25°C). The liquid diene polymer preferably has a polystyrene equivalent weight average molecular weight (Mw) of 1.0 × 10³ or more, more preferably 3.0 × 10³ or more, but preferably 2.0 × 10⁵ or less, more preferably 1.5 × 10⁴ or less, as measured by gel permeation chromatography (GPC).

Examples of the liquid diene polymer include liquid styrene-butadiene copolymers (liquid SBR), liquid polybutadiene polymers (liquid BR), liquid polyisoprene polymers (liquid IR), and liquid styrene-isoprene copolymers (liquid SIR). These may be used alone, or two or more of these may be used in combination.

The amount of the liquid diene polymer, if present, per 100 parts by mass of the polymer component in the first, second, or third layer rubber composition may be 50 parts by mass or less, for example.

The first, second, and third layer rubber compositions may each contain a wax.

Any wax may be used, and examples include petroleum waxes such as paraffin waxes and microcrystalline waxes; naturally-occurring waxes such as plant waxes and animal waxes; and synthetic waxes such as polymers of ethylene, propylene, or other similar monomers. These may be used alone, or two or more of these may be used in combination.

The wax may be a commercial product available from, for example, Ouchi Shinko Chemical Industrial Co., Ltd., Nippon Seiro Co., Ltd., or Seiko Chemical Co., Ltd.

The amount of the wax, if present, per 100 parts by mass of the polymer component in the first, second, or third layer rubber composition is preferably 0.5 parts by mass or more, more preferably 1 part by mass or more. The amount is also preferably 10 parts by mass or less, more preferably 7 parts by mass or less.

The rubber compositions may contain additives commonly used in the tire industry, in addition to the above-mentioned components. Examples of such additives include fillers such as calcium carbonate, talc, alumina, clay, aluminum hydroxide, aluminum oxide, and mica; processing aids such as plasticizers and lubricants; softeners other than oils and liquid diene polymers; and vulcanizing agents other than sulfur such as organic crosslinking agents and organic peroxides. The amount of such an additive per 100 parts by mass of the rubber component is preferably 0.1 to 200 parts by mass.

The first, second, and third layer rubber compositions (particularly the first layer rubber composition) may each contain a plate-like inorganic filler. This provides better air retention.

Examples of the plate-like inorganic filler include clay, talc, bentonite, and montmorillonite. These may be used alone, or two or more of these may be used in combination.

The amount of the plate-like inorganic filler, if present, per 100 parts by mass of the polymer component in the first, second, or third layer rubber composition is preferably 5 parts by mass or more, more preferably 10 parts by mass or more, but is preferably 85 parts by mass or less, more preferably 70 parts by mass or less.

### (Pneumatic tire)

The pneumatic tire may be produced by conventional methods, such as those described below.

First, the components other than vulcanizing agents and vulcanization accelerators may be compounded (added) and kneaded in a rubber kneading machine such as a Banbury mixer or open roll mill to give a kneaded mixture (base kneading step). Then, a vulcanizing agent and/or vulcanization accelerator may be compounded (added) and kneaded with the kneaded mixture. In this manner, unvulcanized first, second, and third layer rubber compositions can be prepared.

With regard to the kneading conditions used when additives other than vulcanizing agents and vulcanization accelerators are compounded, the kneading temperature is usually 50°C to 200°C, preferably 80°C to 190°C, and the kneading time is usually 30 seconds to 30 minutes, preferably 1 minute to 30 minutes.

When vulcanizing agents and vulcanization accelerators are compounded, the kneading temperature is usually 100°C or lower, preferably from room temperature to 80°C.

Next, each unvulcanized rubber composition may be extruded into the shape of a first layer (innerliner), second layer, or third layer. These layers may then be assembled together with other tire components on a tire building machine to prepare an unvulcanized tire (= a raw cover), which may then be heated and pressed in a vulcanizer to produce a pneumatic tire.

The unvulcanized tire may also be prepared by forming a sheet consisting of first, second, and third layers by a known method, such as laminating rubber composition sheets into a predetermined shape, or charging rubber compositions into two or more extruders to form a two-layered product at the head outlet of the extruders, followed by assembling the sheet with other tire components on a tire building machine.

The first layer of the pneumatic tire preferably has a thickness (thickness before vulcanization) of 0.1 mm or more, more preferably 0.3 mm or more, but preferably 5.0 mm or less, more preferably 2.0 mm or less. When the first layer has a thickness within the range indicated above, the advantageous effects can be more suitably achieved.

The thickness of the first layer refers to the thickness (length in the tire radial direction) of the first layer in the equatorial plane.

The second layer of the pneumatic tire preferably has a thickness (thickness before vulcanization) of 0.1 mm or more, more preferably 0.3 mm or more, but preferably 5.0 mm or less, more preferably 2.0 mm or less. When the second layer has a thickness within the range indicated above, the advantageous effects can be more suitably achieved.

The thickness of the second layer refers to the thickness (length in the tire radial direction) of the second layer in the equatorial plane.

The third layer of the pneumatic tire preferably has a thickness (thickness before vulcanization) of 0.1 mm or more, more preferably 0.3 mm or more, but preferably 5.0 mm or less, more preferably 2.0 mm or less. When the third layer has a thickness within the range indicated above, the advantageous effects can be more suitably achieved.

The thickness of the third layer refers to the thickness (length in the tire axial direction) of the third layer at the widest part of the tire.

The pneumatic tire is suitable for use as a tire for passenger vehicles, large passenger vehicles, large SUVs, heavy duty vehicles such as trucks and buses, light trucks, or motorcycles, or as a run-flat tire or a winter tire.

### EXAMPLES

The present invention is specifically described with reference to examples, but the present invention is not limited to the examples.

The chemicals used in the examples and comparative examples are listed below.
Natural rubber: natural rubber
Butyl-based rubber: Cl-IIR
Thermoplastic elastomer: styrene-isobutylene-styrene triblock copolymer (SIBS, weight average molecular weight: 100,000, styrene unit content: 25% by mass, Shore A hardness: 25)
Carbon black: carbon black (N₂SA: 27 m²/g, DBP oil absorption: 87 mL/100 g)
Antioxidant: N-(1,3-dimethylbutyl)-N'-phenyl-p-phenylenediamine
Zinc oxide: zinc oxide #1 available from Mitsui Mining & Smelting Co., Ltd.
Stearic acid: stearic acid "TSUBAKI" available from NOF Corporation
Oil: aromatic oil
Sulfur: powdered sulfur available from Tsurumi Chemical industry Co., Ltd.
Vulcanization accelerator: di-2-benzothiazolyl disulfide

### <Examples and Comparative Examples>

### (First, second, third layer rubber compositions)

The materials other than the sulfur and vulcanization accelerator in the amounts shown in Table 1, 2, or 3 were kneaded using a Banbury mixer (Kobe Steel, Ltd.) at 150°C for five minutes to give a kneaded mixture. Then, the sulfur and vulcanization accelerator were added to the kneaded mixture, and they were kneaded using an open roll mill at 80°C for five minutes to give an unvulcanized rubber composition.

### (Pneumatic tire)

The unvulcanized first, second, and third layer rubber compositions prepared as above were extruded into the respective component shapes as indicated in Table 4 and then assembled with other tire components on a tire building machine to build an unvulcanized tire. The unvulcanized tire was press-vulcanized at 170°C for 10 minutes to prepare a test tire (size: 195/65R15). The thicknesses shown in Table 4 refer to the thicknesses in the unvulcanized tire.

The structure of the tire was basically as shown in Fig. 1. Specifically, the third layer was adjacent to the carcass on its tire-radially inner side and to the second layer on its tire-radially outer side, and was also provided only from the bead apex tip portion to the portion below the tire-axially outermost end of the breaker. Further, the first and second layers were continuously provided from one bead to the other bead.

The test tires prepared as above were evaluated as described below. Table 4 shows the evaluation results.

### (Adhesion in joint portion)

The test tires, without being mounted on rims, were placed in a moist-heat oven at 80°C and a relative humidity of 95% for four weeks to degrade them. The degraded test tires were run on a drum under over-load conditions corresponding to 140% of the maximum load (maximum air pressure conditions) specified in the JIS standard, and then evaluated for adhesion in the joint portion (peeling at the interface between the first and second layers). The results are expressed as an index relative to Comparative Example 1 (= 100). A higher index indicates better adhesion at the interface between the first and second layers, particularly in the joint portion. An index of 130 or higher is considered good.

### (Air retention)

The test tires mounted on JIS standard rims of 15 × 6JJ were inflated to an initial air pressure of 200 Kpa and left for 90 days at room temperature. Then, the rate (%/month) of decrease in air pressure was calculated. The results are expressed as an index relative to Comparative Example 1 (= 100). A higher index indicates better air retention. An index of 130 or higher is considered good.

### (Crack resistance)

The crack resistance quality of the degraded test tires was evaluated based on the total length (crack number × length) of visually recognizable 1 mm or larger cracks. A smaller index indicates better crack resistance. It should be noted that when the number of cracks was more than 20, it was reported as "countless".

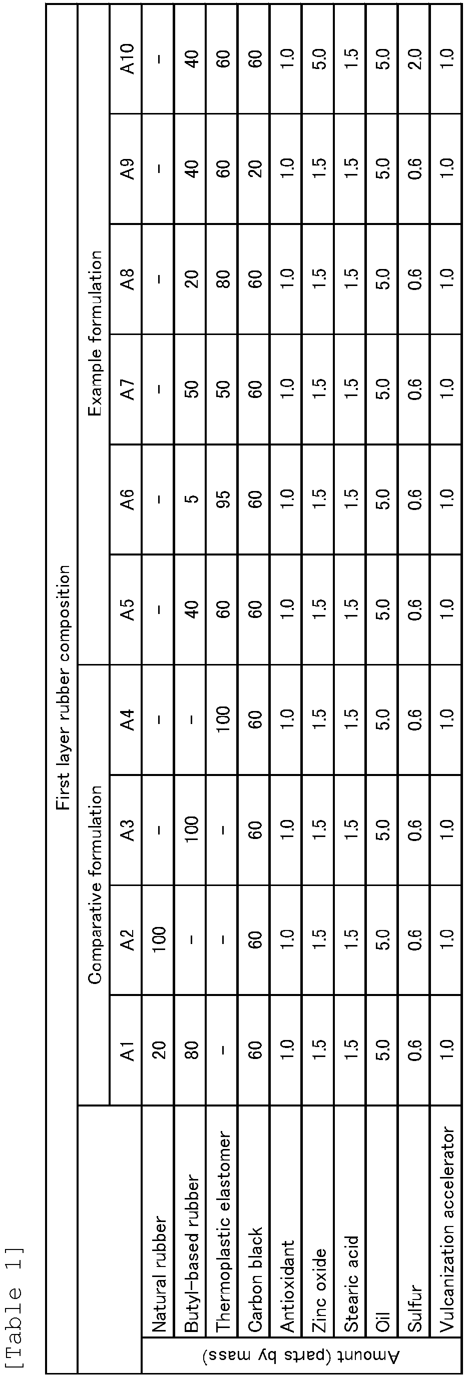

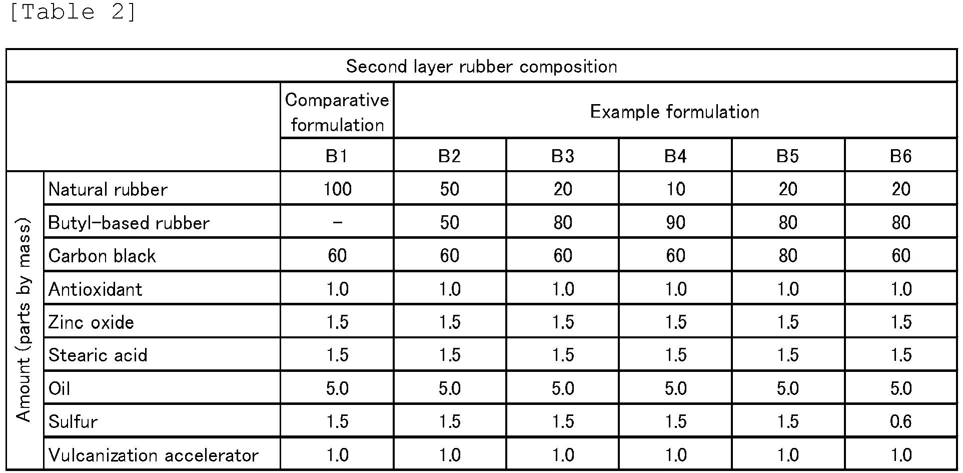

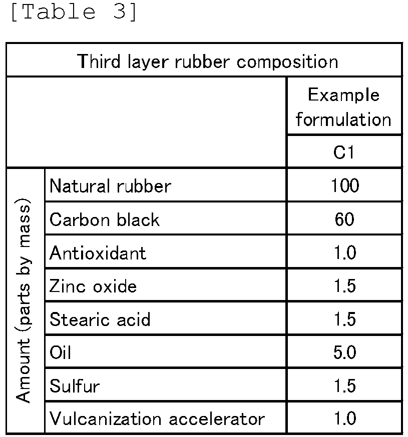

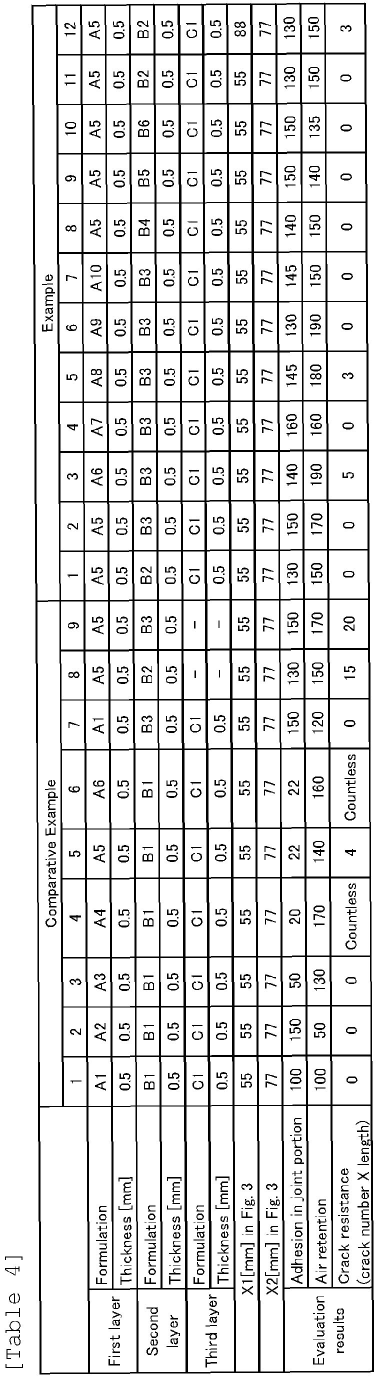

The pneumatic tires of the examples included a carcass, a third layer adjacent to the carcass on the tire-radially inner side, a second layer adjacent to the third layer on the tire-radially inner side, and a first layer adjacent to the second layer on the tire-radially inner side, wherein the third layer was continuously provided along the carcass at least from a bead apex tip portion to a portion below the tire-axially outermost end of a breaker, the first layer included a first layer rubber composition containing a thermoplastic elastomer and a butyl-based rubber, the second layer included a second layer rubber composition containing a butyl-based rubber and an isoprene-based rubber, and the third layer included a third layer rubber composition containing an isoprene-based rubber. These pneumatic tires were excellent in air retention and adhesion at the interface between the first and second layers, particularly in the joint portion, and were also resistant to cracking in the first layer.

Moreover, a comparison of Comparative Examples 1, 5, and 7 and Example 2 and a comparison of Comparative Examples 1, 6, and 7 and Example 3 demonstrate that a combination of a specific first layer and a specific second layer can synergistically improve air retention and adhesion.

A comparison of Examples 1 and 2 with Comparative Examples 8 and 9 demonstrates that cracking in the first layer can be suppressed when the third layer is continuously provided along the carcass at least from the bead apex tip portion to the portion below the tire-axially outermost end of the breaker.

### REFERENCE SIGNS LIST

2 pneumatic tire
4 tread
8a, 8b bead
10 carcass
12 breaker
14 first layer
15 band
16 second layer
17a, 17b third layer
28 first ply
30 second ply
44 inner layer
46 outer layer
50a, 50b bead apex
51a, 51b tip of bead apex on tread side
52a, 52b tire-axially outermost end of breaker
53a, 53b bead core
61 bead apex tip portion
62 portion below tire-axially outermost end of breaker

## Claims

1. A pneumatic tire (2), comprising:
a carcass (10), wherein the carcass is a component including tire cords and a tire cord topping rubber layer;
a third layer (17) adjacent to the carcass on its tire-radially inner side;
a second layer (16) adjacent to the third layer on its tire-radially inner side; and
a first layer (14) adjacent to the second layer on its tire-radially inner side,
the third layer being continuously provided along the carcass at least from a bead apex tip portion (61) to a portion (62) below a tire-axially outermost end (52b) of a breaker (12),
the first layer comprising a first layer rubber composition containing a thermoplastic elastomer and a butyl-based rubber,
the second layer comprising a second layer rubber composition containing a butyl-based rubber and an isoprene-based rubber,
the third layer comprising a third layer rubber composition containing an isoprene-based rubber.

2. The pneumatic tire according to claim 1,
wherein a difference between a distance X1 from an equatorial plane (CL) to a tire-axially innermost end of the third layer in a tire axial direction and a distance X2 from the equatorial plane to the tire-axially outermost end of the breaker in the tire axial direction is 40 mm or less.

3. The pneumatic tire according to claim 1 or 2,
wherein the first and second layers are continuously provided from one bead (8a) to the other bead (8b) of the pneumatic tire.

4. The pneumatic tire according to any one of claims 1 to 3,
wherein the third layer is provided only from the bead apex tip portion to the portion below the tire-axially outermost end of the breaker.

5. The pneumatic tire according to any one of claims 1 to 4,
wherein the first layer constitutes a component located on a radially innermost side of the tire.

## Patentansprüche

1. Luftreifen (2), umfassend:
eine Karkasse (10), wobei die Karkasse eine Komponente ist, die Reifenkorde und eine Reifenkordgummierungs-Gummischicht enthält;
eine dritte Schicht (17) benachbart zu der Karkasse auf ihrer reifenradial inneren Seite;
eine zweite Schicht (16) benachbart zu der dritten Schicht auf ihrer reifenradial inneren Seite; und
eine erste Schicht (14) benachbart zu der zweiten Schicht auf ihrer reifenradial inneren Seite,
wobei die dritte Schicht kontinuierlich entlang der Karkasse mindestens von einem Wulstkernreiter-Spitzenabschnitt (61) bis zu einem Abschnitt (62) unterhalb eines reifenaxial äußersten Endes (52b) eines Breakers (12) vorgesehen ist,
wobei die erste Schicht eine Zusammensetzung der ersten Gummischicht umfasst, die ein thermoplastisches Elastomer und einen Gummi auf Butylbasis enthält,
die zweite Schicht eine Zusammensetzung der zweiten Gummischicht umfasst, die einen Gummi auf Butylbasis und einen Gummi auf Isoprenbasis enthält,
die dritte Schicht eine Zusammensetzung der dritten Gummischicht umfasst, die einen Gummi auf Isoprenbasis enthält.

2. Luftreifen nach Anspruch 1, wobei eine Differenz zwischen einem Abstand X1 von einer Äquatorialebene (CL) zu einem reifenaxial innersten Ende der dritten Schicht in einer axialen Richtung des Reifens und einem Abstand X2 von der Äquatorialebene zu dem reifenaxial äußersten Ende des Breakers in der axialen Richtung des Reifens 40 mm oder weniger beträgt.

3. Luftreifen nach Anspruch 1 oder 2, wobei die erste und die zweite Schicht kontinuierlich von einem Wulst (8a) zum anderen Wulst (8b) des Luftreifens vorgesehen sind.

4. Luftreifen nach einem der Ansprüche 1 bis 3, wobei die dritte Schicht nur vom Wulstkernreiter-Spitzenabschnitt bis zu dem Abschnitt unterhalb des in Reifenachse äußersten Endes des Breakers vorgesehen ist.

5. Luftreifen nach einem der Ansprüche 1 bis 4, wobei die erste Schicht eine Komponente bildet, die sich auf einer radial innersten Seite des Reifens befindet.

## Revendications

1. Bandage pneumatique (2) comprenant :
une carcasse (10), dans lequel la carcasse est un composant incluant des câblés de pneumatique et une couche de caoutchouc d'enrobage de câblés de pneumatique ;
une troisième couche (17) adjacente à la carcasse sur son côté radialement intérieur du pneumatique ;
une deuxième couche (16) adjacente à la troisième couche sur son côté radialement intérieur du pneumatique ; et
une première couche (14) adjacente à la deuxième couche sur son côté radialement intérieur du pneumatique,
la troisième couche étant prévue en continu le long de la carcasse au moins depuis une portion de pointe de sommet de talon (61) jusqu'à une portion (62) en dessous d'une extrémité axialement la plus à l'extérieur du pneumatique (52b) d'une armature de sommet (12),
la première couche comprenant une première composition de caoutchouc de première couche contenant un élastomère thermoplastique et un caoutchouc à base de butyle,
la deuxième couche comprenant une composition de caoutchouc de deuxième couche contenant un caoutchouc à base de butyle et un caoutchouc à base d'isoprène,
la troisième couche comprenant une composition de caoutchouc de troisième couche contenant un caoutchouc à base d'isoprène.

2. Bandage pneumatique selon la revendication 1,
dans lequel une différence entre une distance X1 depuis un plan d'équateur (CL) jusqu'à une extrémité axialement la plus à l'intérieur du pneumatique de la troisième couche dans une direction axiale du pneumatique et une distance X2 depuis le plan d'équateur jusqu'à l'extrémité axialement la plus à l'extérieur du pneumatique de l'armature de sommet dans la direction axiale du pneumatique est de 40 mm ou moins.

3. Bandage pneumatique selon la revendication 1 ou 2,
dans lequel la première et la deuxième couche sont prévues en continu depuis un talon (8a) jusqu'à l'autre talon (8b) du bandage pneumatique.

4. Bandage pneumatique selon l'une quelconque des revendications 1 à 3, dans lequel la troisième couche est prévue uniquement depuis la portion de pointe de sommet de talon jusqu'à la portion en dessous de l'extrémité axialement la plus à l'extérieur du pneumatique de l'armature de sommet.

5. Bandage pneumatique selon l'une quelconque des revendications 1 à 4, dans lequel la première couche constitue un composant situé sur un côté radialement le plus à l'intérieur du pneumatique.
